# EUROPÄISCHE PATENTANMELDUNG

(11) **EP 3 093 981 A1**
(43) Veröffentlichungstag der Anmeldung: **16.11.2016**
(21) Anmeldenummer: 15001423.1
(22) Anmeldetag: 12.05.2015
(51) Int. Cl.: H02P 1/28, H02P 1/42, H02P 1/58

(54) **VORRICHTUNG UND VERFAHREN ZUM ANLASSEN EINES MOTORS FÜR WECHSELSTROM**

(71) Anmelder: Weigel, Roland, 9652 Neu St. Johann (CH)
(72) Erfinder: Weigel, Roland, 9652 Neu St. Johann (CH)
(74) Vertreter: Hepp Wenger Ryffel AG

(57) **Zusammenfassung**

Vorrichtung (1) zum Anlassen eines Motors (4) für Wechselstrom, insbesondere für einen Kompressor (5), wobei der Motor (4) wenigstens eine Zuleitung (3) für die elektrische Stromversorgung aufweist, umfassend
- ein Stellglied (10) zum Begrenzen des Stromes in der Zuleitung (3),
- ein Schaltelement (16) zum Überbrücken des Stellgliedes (10),
- ein Stromüberwachungselement (15) zum Überwachen des Stromes in der Zuleitung (3),
- eine Steuerung (18) zum Ansteuern des Schaltelementes (16), Das Stellglied (10) umfasst wenigstens ein erstes Heissleiterelement (11) und ein zweites Heissleiterelement (12) sowie ein Umschaltelement (14) zum Umschalten zwischen dem wenigstens ersten und zweiten Heissleiterelement (11, 12).

## Beschreibung

Die vorliegende Erfindung betrifft eine Vorrichtung und ein Verfahren zum Anlassen eines Motors für Wechselstrom gemäss den Oberbegriffen der unabhängigen Ansprüche.

Motoren für Wechselstrom werden vielseitig in der Industrie zum Antreiben von Maschinen und Geräten sowie in verschiedenen Haushaltsgeräten verwendet. Diese Motoren werden meist vom öffentlich zugänglichen Stromnetz gespeist, wobei sowohl eine Einphasenversorgung wie auch eine Dreiphasenversorgung in Frage kommen. Bekanntermassen wird beim Anlassen solcher Motoren ein hoher Stromwert benötigt, welcher sich beispielsweise bei instabilen Versorgungsnetzen durch flackernde Glühlampen oder durch Störungen im Computerbetrieb bemerkbar machen kann. Der Anlaufstrom eines Elektromotors beträgt üblicherweise das 6 bis 8 fache des Nennstromes.

Im Zuge der Energiewende soll die Stromversorgung vermehrt lokal durch kleinere Stromerzeuger wie beispielsweise Windkraftwerke oder Photovoltaikanlagen sichergestellt werden können. Vielerorts sind Bestrebungen im Gange, bestehende Grosskraftwerke wie beispielsweise Atomkraftwerke zusehends vom Netz zu trennen und abzuschalten. Durch den Wegfall solcher konstanter Energielieferanten wird es jedoch nötig, dass dem sanften Einschalten von grösseren Elektromotoren vermehrt Aufmerksamkeit geschenkt wird.

Ebenfalls im Zuge der Energiewende wird für Heizleistungen, insbesondere in Privathaushalten, vermehrt auf Wärmepumpen gesetzt, welche mittels eines Wärmetauschers und eines entsprechenden Kompressors die Wärme beispielsweise aus der Umgebungsluft gewinnen, um Warmwasser für Heizung und/oder Brauchwasser zur Verfügung zu stellen.

Die Problematik der hohen Strombelastung beim Anlassen solcher Kompressoren für Wärmepumpen wurde schon früh erkannt und verschiedentlich angegangen. So sind beispielsweise heute sogenannte Softstarter oder Sanftstarter für Wärmepumpenkompressoren am Markt erhältlich, welche grösstenteils mittels Phasenanschnitttechnologie arbeiten. Ebenfalls auf dem Markt verfügbar sind sogenannte Frequenzumrichter, welche durch Anpassen der Frequenz und Spannung ein sanftes Anfahren des Kompressormotors ermöglichen sollen.

Gleichzeitig ist der Gesetzgeber bestrebt, zukünftig nur noch Elektromotoren mit einem hohen Wirkungsgrad für elektrische Geräte zuzulassen. So sind beispielsweise seit 2011 nur noch Elektromotoren der Effizienzklasse IE2 zugelassen. Ab Januar 2015 sind gar nur noch solche Elektromotoren nach der Effizienzlasse IE3 zugelassen für Motoren im Leistungsbereich von 7,5 kW bis 375 kW. Die entsprechenden Energieeffizienzklassen sind in der Norm IEC 60034-30 beschrieben. Die entsprechende EU-Verordnungen 640/2009 und 04/2014 legen die Bedingungen für den Umstieg auf die neue Energieeffizienztechnik fest.

Bekannterweise haben Kältemittelkompressoren bzw. deren Motoren einen Anlaufstrom (LRA) der dem sechs- bis achtfachen Nennstrom entspricht. Damit die Netzrückwirkungen entsprechend den gültigen Normen (EN 61000-3-3, EN 61000-3-2) das zulässige Mass nicht übersteigen, werden unterschiedliche Technologien, wie oben beschrieben, zur Begrenzung des Anlaufstromes angeboten - Phasenanschnitt bzw. Frequenzumrichter.

Beide Technologien arbeiten digital und produzieren ein teilweise beachtenswertes Potential an Oberschwingungen bzw. Oberwellen. Die Folgen sind asymmetrische Belastungen von Zuleitungen, Verdichtermotoren und Schaltelementen jeder Art. Solche Belastungen machen sich unter anderem in Verlustwärme bemerkbar, was wiederum den Wirkungsgrad verschlechtert. Ausserdem können diese zu Überhitzung wichtiger Komponenten führen und die Ausfallsquote steigern bzw. die Betriebssicherheit vermindern. Auch der Einsatz von Filterelementen oder hochwertig abgeschirmten Zuleitungen kann keine nachhaltige Entstörung bewirken.

Nachdem seit Januar 2015 die Motorennorm IE3 mit der Bezeichnung "Premium Efficiency" gilt, wird mit diesem verbesserten Wirkungsgrad zwangsweise auch ein höherer Anlaufstrom (LRA) in der Grössenordnung des acht- bis zehnfachen Nennstromes einhergehen. Solche höheren Anlaufströme sind jedoch mit dem gültigen Normen für die Netzrückwirkung nicht mehr vertretbar. Entsprechend sind die IE3-Motoren weder mit Frequenzumrichtern noch mit Phasenanschnitt vernünftig zu betreiben. Der Gesetzgeber hat dies erkannt und entsprechend für Motoren für Kompressoren eine Ausnahmeregelung zugelassen. So ist zukünftig weiterhin ein IE2-Motor nach der neuen Norm zulässig, wenn dieser mit einem Frequenzumrichter betrieben wird.

Nicht berücksichtigt bei dieser Ausnahme wurde jedoch, dass durch diese Regelung die störenden Oberschwingungen/Oberwellen nicht beseitigt werden können, sondern lediglich aufgrund des schlechteren Wirkungsgrads der Motoren auf einen kleineren Wert begrenzt werden.

Es ist daher die Aufgabe der Erfindung, die Nachteile des Stands der Technik zu überwinden. Insbesondere sollen eine Vorrichtung und ein Verfahren zur Verfügung gestellt werden, um Motoren für Wechselspannung schonend anlassen und insbesondere auch Motoren der Energieeffizienzklasse IE3 vernünftig anlassen und betreiben zu können.

Diese Aufgaben werden durch die in den unabhängigen Patentansprüchen aufgeführten Merkmale gelöst.

Die Erfindung betrifft eine Vorrichtung zum Anlassen eines Motors für Wechselstrom, insbesondere für einen Kompressor, wobei der Motor wenigstens eine Zuleitung für die elektrische Stromversorgung aufweist. Die Vorrichtung umfasst ein Stellglied zum Begrenzen des Stromes in der Zuleitung, ein Schaltelement zum Überbrücken des Stellgliedes, ein Stromüberwachungselement zum Überwachen des Stromes in der Zuleitung und eine Steuerung zum Ansteuern des Schaltelementes. Die Erfindung zeichnet sich dadurch aus, dass das Stellglied wenigstens ein erstes Heissleiterelement und ein zweites Heissleiterelement sowie ein Umschaltelement zum Umschalten zwischen dem wenigstens ersten und zweiten Heissleiterelement umfasst.

Durch die Verwendung von Heissleiterelementen im Stellglied wird ein sanftes Anfahren des Motors gewährleistet. Heissleiterelemente stellen im kalten Zustand einen hohen Widerstand dar, so dass in der Zuleitung entsprechend beim Einschalten erst ein kleiner Strom fliessen kann. Im Laufe der Zeit erwärmt sich das Heissleiterelement und wird entsprechend niederohmig. Der Strom in der Zuleitung nimmt kontinuierlich zu. In dieser kontinuierlichen Stromzunahme liegt der grosse Vorteil der erfindungsgemässen Vorrichtung zum Anlassen des Motors. Während bei dem verwendeten Softstarter oder Sanftstarter nach dem Stand der Technik durch die Verwendung der Digitaltechnik die Sinuswelle zerhackt oder angeschnitten wird und die daraus folgenden hohen Flankensteilheiten die entsprechenden störenden Oberwellen im Netz generieren, können durch das kontinuierliche Ansteigen des Stroms in der Zuleitung und im Stellglied keine solchen Oberwellen generiert werden. Lediglich der für den Anlass und den Betrieb benötigte Anlaufstrom kann allenfalls zu Störungen bei instabilen Netzen führen.

Durch die Verwendung mehrerer Heissleiterelemente und eines entsprechenden Umschaltelements in der Zuleitung kann nun jedes Heissleiterelement beispielsweise nur so lange betrieben werden, bis ein vorgegebener Strom fliesst. Durch das Umschalten wird das bereits erwärmte Heissleiterelement aus der Zuleitung genommen und entsprechend durch ein frisches Heissleiterelement ersetzt. Entsprechend der kälteren Temperatur dieses zweiten Heissleiterelementes wird der Strom wiederum reduziert und steigt in der Folge kontinuierlich an. Dieser Vorgang kann nun theoretisch beliebig oft wiederholt werden, sodass der Motor mit einem sehr geringen Anlaufstrom gestartet werden kann. Beispielsweise sind Anlaufströme in der Grössenordnung vom anderthalb- bis dreifachen Nennstrom denkbar. Selbst die mit herkömmlichen Anlassern nicht vernünftig startbaren Motoren der Effizienzklasse IE3 können so ohne Probleme in Kompressoren verwendet und entsprechend angelassen werden, ohne die geltenden Normen EN 61000-3-3 und EN 61000-3-2 zu verletzen. Es können somit sowohl Energieeinsparungen als auch Kosteneinsparungen ungesetzt werden.

Als Heissleiterelement kann ein einzelner Heissleiter oder mehrere in Reihe geschaltete Heissleiter verwendet werden. Entsprechend kann mit einer geringen Anzahl unterschiedlicher Bauteile eine Vorrichtung zum Anlassen unterschiedlicher Motoren gebaut werden. Es versteht sich von selbst, dass bei dreiphasigen Systemen das Stellglied in jeder Zuleitung bzw. in jeder Phase angeordnet wird. Entsprechend erfolgt auch die Überwachung des Stromes bevorzugt in allen drei Phasen.

Das Umschaltelement kann von der Steuerung ansteuerbar sein. Dies erlaubt beispielsweise, dass das Umschaltelement in vorbestimmten Zeitabschnitten umschaltet. Alternativ ist jedoch auch denkbar, dass das Umschaltelement in Abhängigkeit des überwachten Stromes in der Zuleitung von der Steuerung angesteuert wird.

Die Steuerung kann derart ausgestaltet sein, dass diese beim Erreichen eines voreingestellten oder voreinstellbaren ersten Stromwertes in der Zuleitung das Umschaltelement betätigt. Eine solche Steuerung kann beispielsweise sicherstellen, dass der für das Anlaufen des Motors benötigte Strom einen bestimmten Wert nicht überschreitet. Beispielsweise ist somit auch eine bedingte Temperaturkontrolle der Heissleiterelemente möglich. Gleichzeitig werden die Heissleiterelemente geschont, indem diese nur bis zu einem zulässigen Stromwert belastet werden. Dies führt zu einer längeren Lebensdauer der Vorrichtung, was insbesondere bei deren Verwendung in einer Wärmepumpe wünschenswert ist.

Die Vorrichtung kann ein Spannungsüberwachungselement zum Überwachen der Spannung über dem Stellglied aufweisen. Eine Spannungsüberwachung erlaubt beispielsweise das Aufzeichnen von Störspannungen sowie des Verhaltens der Heissleiterelemente.

Das Schaltelement kann von der Steuerung ansteuerbar sein, insbesondere in Abhängigkeit der Spannung über dem Stellglied. Entsprechend kann beispielsweise bei unzulässiger Spannung oder bei Erreichen der Nenndrehzahl das Stellglied überbrückt werden.

Die Steuerung kann derart ausgestaltet sein, dass diese bei Erreichen eines voreingestellten oder voreinstellbaren Spannungswertes über dem Stellglied das Schaltelement betätigt. Üblicherweise ist beim Start des Motors die Spannung über dem Stellglied relativ hoch, da das entsprechende Heissleiterelement noch kalt und somit hochohmig ist. Im Laufe der Zeit wird sich dieser Spannungswert jedoch an ein Minium annähern, wobei ein solcher minimaler Spannungswert bedeutet, dass der Motor annähernd mit der Nenndrehzahl betrieben wird. Entsprechend kann ein solcher Spannungswert voreingestellt werden, sodass bei Erreichen dieses minimalen Spannungswertes das Stellglied überbrückt werden kann. Entsprechend wird im Stellglied keine Verlustleistung mehr generiert, und die Heissleiterelemente des Stellglieds können sich für den nächsten Startvorgang abkühlen.

Die Vorrichtung kann einen Nulldurchgangsdetektor aufweisen. Die Steuerung kann gleichzeitig derart ausgestaltet sein, dass diese das Schaltelement und/oder das Umschaltelement im Nulldurchgang ansteuert. Dadurch, dass Schaltungen jeweils im Nulldurchgang ausgeführt werden, kann ein weiterer Beitrag zur Reduzierung von Oberwellen und Transienten geleistet werden. Es entstehen keine abrupten Schaltflanken.

Die Vorrichtung kann einen Sicherungsschalter, insbesondere in Form eines Nulldurchgangsschalters aufweisen. Dieser Sicherungsschalter dient zum Ein- bzw. Ausschalten der Vorrichtung. Die Steuerung kann gleichzeitig derart ausgestaltet sein, dass diese bei Überschreiten eines vorgegebenen oder vorgebbaren zweiten Stromwertes in der Zuleitung den Sicherungsschalter automatisch ausschaltet. Eine solche Vorrichtung erlaubt, dass die Vorrichtung beispielsweise bei Vorliegen einer Störung oder bei Blockieren des Motors nicht überlastet werden kann. Dabei kann der zweite Stromwert so eingestellt werden, dass dieser im Bereich des drei- bis fünffachen Nennstroms des Motors liegt. Sinnvollerweise ist die Steuerung bzw. die Überwachung des Stromes in der Zuleitung derart präzise, dass schon eine kurzzeitige Überlastung des vorgegebenen Stromwertes ein Ausschalten bewirkt.

Somit kann sichergestellt werden, dass der Sicherungsschalter ausschaltet, bevor die üblicherweise in Haushaltungen oder Industrieanwendungen verwendete Sicherungsautomatik ausgelöst wird.

Die Steuerung kann ausserdem einen Timer mit einer voreingestellten oder voreinstellbaren Wartezeit umfassen. Zusätzlich kann die Steuerung derart ausgestaltet sein, dass nach erfolgtem automatischem Ausschalten des Sicherungsschalters und nach Ablauf der Wartezeit die Steuerung den Sicherungsschalter wieder einschaltet. Entsprechend wird sichergestellt, dass der Motor nach einem nicht erfolgreichen Startversuch und nach Ablauf der Wartezeit nochmals gestartet werden kann. Die Wartezeit wird dabei so bemessen, dass sich das Stellglied und der Motor entsprechend wieder abkühlen können, so dass wiederum ein sanfter Anlass gewährleistet wird.

Die Steuerung kann weiter derart ausgebildet sein, dass beispielsweise ein dreimaliges automatisches Ausschalten und Wiedereinschalten zu einer Alarmsituation führt. Beispielsweise kann die Steuerung in einer solchen Situation eine Fehlermeldung an ein übergeordnetes System absetzen.

Die Zuleitung kann einen Varistor aufweisen, um die Vorrichtung vor Überspannungen aus dem Netz zu schützen. Insbesondere bei einer Verwendung der Vorrichtung in einem öffentlichen Netz ist es vorteilhaft, wenn die Vorrichtung entsprechend vor Störungen, verursacht durch andere Netzteilnehmer, geschützt wird.

Ein weiterer Aspekt der vorliegenden Erfindung ist auf ein Verfahren zum Anlassen eines Motors für Wechselstrom gerichtet. Dabei wird in einer Zuleitung zum Motor ein mit einem Schaltelement überbrückbares Stellglied angeordnet, wobei das Stellglied ein Umschaltelement und wenigstens ein erstes Heissleiterelement und ein zweites Heissleiterelement aufweist. Das Verfahren umfasst die Schritte:
- Zuschalten des Stellgliedes mit dem ersten Heissleiterelement in die Zuleitung,
- Umschalten vom ersten Heissleiterelement zum zweiten Heissleiterelement.

Durch die Verwendung von Heissleiterelementen im Stellglied wird bewirkt, dass ein kontinuierlich ansteigender Strom dem Motor zugeführt wird. Entsprechend wird der Motor sanft starten und keinen unkontrolliert hohen Stromverbrauch bedingen. Durch das Umschalten von einem ersten Heissleiterelement zu einem zweiten Heissleiterelement kann beispielsweise sichergestellt werden, dass der dem Motor zugeführte Strom innerhalb bestimmter Grenzen bleibt. So wird beispielsweise das erste Heissleiterelement solange betrieben, bis es eine bestimmte Temperatur erreicht. Anschliessend wird das erste Heissleiterelement aus der Zuleitung entfernt und das zweite Heissleiterelement zugeschaltet. Es versteht sich wiederum von selbst, dass ein Heissleiterelement ein einzelner Heissleiter oder mehrere in Reihe geschaltete Heissleiter sein können. Ebenfalls versteht es sich von selbst, dass in einem dreiphasigen System in jeder Phase ein entsprechendes Stellglied angeordnet sein kann und vorzugsweise angeordnet ist.

Der Strom in der Zuleitung kann überwacht werden und entsprechend das Umschalten zwischen den Heissleiterelementen in Abhängigkeit vom Strom in der Zuleitung erfolgen. Das Umschalten kann dabei bei Erreichen eines ersten voreingestellten oder voreinstellbaren Stromes in der Zuleitung erfolgen. Entsprechend kann gewährleistet werden, dass der Motor maximal mit dem voreingestellten oder voreinstellbaren Strom gestartet wird. Höhere Strombelastungen sind entsprechend ausgeschlossen.

Die Spannung über dem Stellglied kann überwacht werden und bei Erreichen einer voreingestellten oder voreinstellbaren Spannung kann das Stellglied überbrückt werden. Ein solches Überbrücken erfolgt beispielsweise dann, wenn die Spannung über dem Stellglied soweit abgenommen hat, dass diese nahe einem minimalen Wert liegt. Entsprechend kann davon ausgegangen werden, dass der Motor nahezu mit der Nenndrehzahl betrieben wird. Durch das Überbrücken des Stellglieds wird verhindert, dass zusätzliche Energie im Stellglied in Wärme umgewandelt wird. Die im Stellglied verwendeten Heissleiterelemente können auskühlen, sodass diese für den nächsten Startvorgang wieder in kaltem Zustand eingesetzt werden können.

Der Nulldurchgang der Spannung in der Zuleitung kann detektiert werden, sodass das Umschalten und/oder Überbrücken im Nulldurchgang erfolgen kann. Durch das Umschalten und/oder Überbrücken im Nulldurchgang kann gewährleistet werden, dass keine unnötigen Schaltflanken oder Spannungsspitzen generiert werden, welche sich wiederum als störende Oberwellen im Netz ausbreiten können.

Der Motor ist üblicherweise zum Antreiben einer Last vorgesehen. Vor dem Anlassen des Motors kann die Last vom Motor entkoppelt oder zumindest reduziert werden. Bei der Verwendung des Motors in einem Kompressor wird beispielsweise ein Bypassventil im Kompressor geöffnet, sodass der Druckunterschied über den Kompressor reduziert oder egalisiert wird. Dadurch, dass der Motor von der Last getrennt bzw. die Last reduziert wird, kann ein einfacheres Anfahren erfolgen.

Bei Überschreiten eines vorgegebenen oder vorgebbaren zweiten Stromwertes in der Zuleitung kann ein Sicherungsschalter automatisch ausgeschaltet werden. Ein solcher Sicherungsschalter ist beispielsweise in Form eines Nulldurchgangsschalters in der Zuleitung zum Motor eingebaut. Entsprechend kann eine Überbelastung des Stellgliedes bzw. des Motors verhindert werden, wenn dieser beispielsweise blockiert oder aber eine andere Störung vorliegt.

Nach erfolgtem automatischem Ausschalten des Sicherungsschalters und nach Ablauf einer voreingestellten oder voreinstellbaren Wartezeit kann der Sicherungsschalter wieder eingeschaltet werden. Somit ist beispielsweise ein automatisches Wiedereinschalten nach einem erfolglosen Einschaltversuch möglich.

Ausserdem kann beispielsweise nach einem mehrmalig aufeinanderfolgenden erfolglosen Wiedereinschalten einer Fehlermeldung erzeugt werden, welche von einem angeschlossenen System weiterverarbeitet wird.

Die Erfindung wird im Folgenden anhand von Abbildungen exemplarischer Ausführungsbeispiele näher erläutert. Es zeigen:
- Figur 1:: ein Ersatzschaltbild einer erfindungsgemässen Vorrichtung,
- Figur 2:: ein drei-phasig gemessener Anlaufstrom eines Motors eines Kompressors, welcher mit einem Anlasser mit Phasenanschnitt nach dem Stand der Technik startet,
- Figur 3:: ein drei-phasig gemessener Anlaufstrom des Motors aus Figur 2, welcher mit einem Anlasser mit Heissleiter nach dem Stand der Technik startet,
- Figur 4:: ein drei-phasig gemessener Anlaufstrom des Motors aus Figur 2, welcher mit der erfindungsgemässen Vorrichtung gemäss Figur 1 startet,
- Figur 5:: einen Vergleich der Rückwirkung eines Anlassers mit Phasenanschnitt gegenüber der Vorrichtung gemäss Figur 1, wobei ein Zeitbereich 200 ms nach dem Einschalten dargestellt ist.

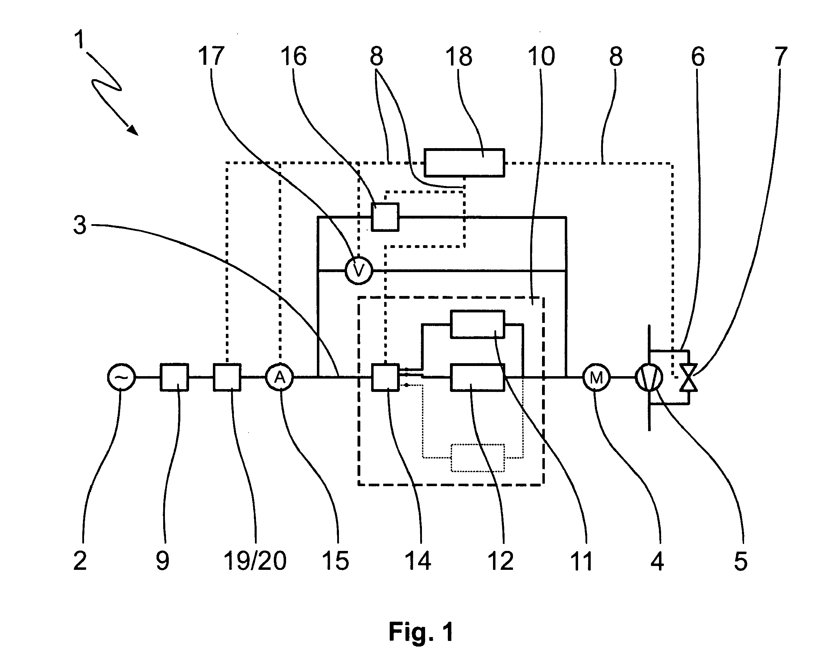

In Figur 1 ist ein Ersatzschaltbild einer erfindungsgemässen Vorrichtung 1 zum Anlassen eines Motors 4 für Wechselstrom dargestellt. Ausgehend von einem Netzeingang 2 wird mittels einer Zuleitung 3 der Motor 4, welcher einen Kompressor 5 antreibt, mit Energie versorgt. Um die mit dem Anlassen einhergehenden hohen Anlaufströme zu begrenzen, ist in der Zuleitung 3 ein Stellglied 10 eingebaut. Im Gegensatz zum allgemein üblichen Stand der Technik wird nun das Stellglied nicht digital betrieben, die Energie also nicht mittels Phasenanschnitt begrenzt oder die Frequenz mit einem Frequenzumformer angepasst. Das Stellglied 10 weist wenigsten zwei Heissleiterelemente 11, 12 auf, welche der Reihe nach mittels eines Umschaltelements 14 in der Zuleitung 3 betrieben werden können. Ebenfalls weist die Vorrichtung 1 ein Schaltelement 16 auf, welches das Stellglied 10 überbrücken kann. Beim Einschalten der Vorrichtung bzw. beim Anlaufen lassen des Motors wird vorzugweise der Kompressor 5 vom Motor getrennt oder zumindest über eine Bypass Leitung 6 und ein entsprechendes Bypass Ventil 7 druckfrei betrieben. Entsprechend wird die Last, welche der Motor 4 schlussendlich antreiben soll, reduziert, so dass weniger Energie für den Start des Motors 4 aufgewendet werden muss. Um das Bypass Ventil 7 schalten zu können, ist dieses mit der Steuerung 18 über eine Signalleitung 8 verbunden.

Um den Strom in der Zuleitung 3 weiter zu reduzieren, werden nun anstelle eines einzigen Heissleiterelementes, der Reihe nach wenigstens zwei Heissleiterelemente 11, 12 verwendet. Da das erste Heissleiterelement 11 beim Start des Anlaufvorgangs noch kalt ist, weist dieses einen hohen Widerstandswert auf und der Strom in der Zuleitung 3 zum Motor 4 wird begrenzt. Das erste Heissleiterelement 11 wird sich in der Folge aber erwärmen und entsprechend seinen Widerstandswert verringern. Der Anlaufstrom in der Zuleitung 3 wird dadurch kontinuierlich erhöht. Bevor nun das erste Heissleiterelement 11 im thermischen Gleichgewicht betrieben wird, wird mit dem Umschaltelement 14 das erste Heissleiterelement 11 aus der Zuleitung 3 genommen und an seiner Stelle das zweite Heissleiterelement 12 zugeschaltet. Dieses zweite Heissleiterelement 12 ist noch kalt und weist entsprechend wiederum einen hohen Widerstandswert auf. Somit wird durch das Umschalten vom ersten auf das zweite Heissleiterelement der Widerstandswert des Stellgliedes 10 erhöht und dadurch der Anlaufstrom in der Zuleitung 3 zum Motor 4 reduziert. Mit der Zeit erwärmt sich das zweite Heissleiterelement 12, der Widerstandswert sinkt, der Anlaufstrom in der Zuleitung 3 steigt.

Durch die Verwendung von mehreren Heissleiterelementen, welche der Reihe nach in die Zuleitung geschaltet werden, kann theoretisch der Anlaufstrom beliebig klein gehalten werden. Somit wird beispielsweise ermöglicht, dass ein Kompressormotor mit einem Nennstrom von 12 A an einer haushaltüblichen 10 A oder gar an einer 6 A Sicherung mit einer Auslösecharakteristik Typ C nach VDE 0641 Teil 11, DIN EN 60898-1:2005-04 gestartet und betrieben werden kann.

Das Umschaltelement 14 wird von einer Steuerung 18 über eine Signalleitung 8 angesteuert, welche wiederum basierend auf dem in der Zuleitung 3 fliessenden Strom das Umschalten auslöst.

Hierzu ist in der Zuleitung 3 ein Stromüberwachungselement 15 angeordnet, welches ebenfalls über eine Signalleitung 8 mit der Steuerung 18 verbunden ist. Die Steuerung 18 kann nun bei Erreichen eines voreingestellten Stromwertes, beispielsweise bei Erreichen von 20 A das Umschalten auslösen. Wenn das Umschalten innerhalb kurzer Zeit erfolgt, wird eine haushaltübliche 10 A oder 6 A Sicherung nicht ausgelöst und der Motor kann weiter gestartet werden.

Die Vorrichtung 1 weist weiter ein Spannungsüberwachungselement 17 auf, welches die Spannung über dem Stellglied 10 überwacht und mittels einer Signalleitung 8 an die Steuerung 18 weitermeldet. Sobald diese Spannung einen voreingestellten oder voreinstellbaren Wert unterschreitet, wird über die Steuerung 18 und einer weitere Signalleitung 8 das Schaltelement 16 geschlossen, so dass das Stellglied 10 überbrückt wird. Der voreingestellte Wert ist dabei so definiert, dass dieser kurz vor Erreichen der Nenndrehzahl des Motors 4 unterschritten wird. Entsprechend wird der Motor 4 kurz vor Erreichen der Nenndrehzahl nicht mehr über das Stellglied mit Energie versorgt, sondern direkt an der Netzversorgung 2 angeschlossen.

Um unerwünschte Spannungs- oder Stromspitzen beim Umschalten zwischen den Heissleiterelementen 11, 12 oder beim Überbrücken des Stellgliedes 10 zu vermeiden, weist die Vorrichtung einen Nulldurchgangsdetektor 19 auf, welcher mit der Steuerung verbunden ist. Entsprechend wird ermöglicht, dass die Schaltvorgänge jeweils präzise zum Zeitpunkt des Nulldurchganges, also im spannungsfreien Zustand erfolgen. Alternativ können auch das Umschaltelement 14 und das Schaltelement 16 direkt als Nulldurchgangsschalter ausgebildet sein.

Um bei Störungen nicht den Motor 4 oder das Stellglied 10 zu überlasten, kann über das Stromüberwachungselement 15 auch ein Fehlerstrom detektiert werden. Erreicht der Strom in der Zuleitung 3 beispielsweise einen Wert von 30 A, wird ein weiteres Schaltelement, z.B. in Form eines Nulldurchgangsschalters 20 geöffnet, so dass die gesamte Vorrichtung 1 von der Netzversorgung 2 getrennt wird. Es versteht sich von selbst, dass dabei die Steuerung 18 weiter arbeiten kann. Die Steuerung 18 ist unter anderem mit einem Timer versehen, welcher nach einer voreingestellten Wartezeit, z.B. 15 min den Nulldurchgangsschalter 20 wieder schliesst. Die Vorrichtung versucht nun erneut, den Motor 4 zu starten. Erst bei einem wiederholten Fehlstart, bzw. bei wiederholtem Ausschalten des Nulldurchgangsschalters 20 wird die Steuerung die Anlaufversuche komplett abbrechen und eine entsprechend Fehlermeldung absetzen.

Die Schaltung gemäss Figur 1 zeigt lediglich die erfindungsgemässe Vorrichtung in einer einzelnen Zuleitung zum Motor, beispielsweise für einen Einphasenmotor. Es versteht sich von selbst, dass bei Verwendung eines Dreiphasenmotors die entsprechende Vorrichtung in jeder der drei Phasen angeordnet wird. Dabei können jedoch einzelne Elemente wie beispielsweise die Steuerung zentral ausgebildet sein, während andere Elemente, z.B. das Stellglied, vorzugsweise in jeder Phase vorhanden sind.

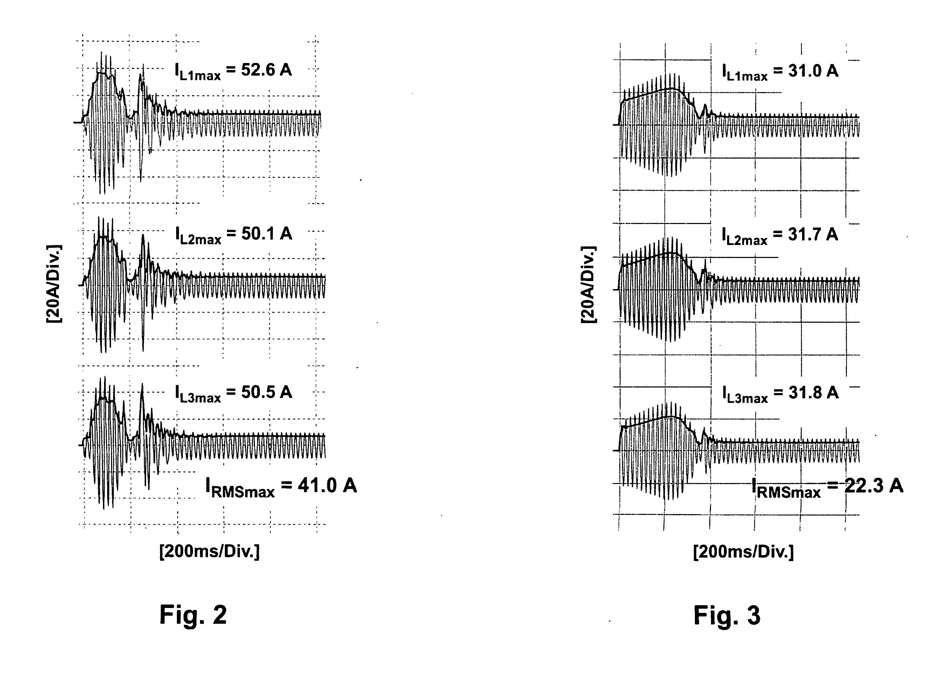

Die Figur 2 zeigt ein drei-phasig gemessener Anlaufstrom eines Motors eines Kompressors, welcher mit einem Anlasser mit Phasenanschnitt nach dem Stand der Technik startet. Dabei fällt in erster Linie der unregelmässige Stromverlauf in allen drei Phasen auf, welcher von den durch den Phasenanschnitt herrührenden nichtkontrollierbaren Oberwellen auf dem Netz stammt. Aufgrund von ungleichmässigen Wicklungen sind die maximalen Anlaufströme, welche gemessen wurden nicht in allen drei Phasen identisch. Die maximalen Ströme bewegen sich jedoch im Bereich von 50 A, was eine haushaltsübliche 10 A Sicherung zum Auslösen bringt. Der maximale Mittelwert des Anlaufstromes I_{RMSmax} beträgt 41 A. Der für die Messung verwendete Motor mit Kompressor ist ein Copeland Scroll ZH45K4E-TFD mit einem Nennstrom MOC von 11.8 A und einem Anlaufstrom LRA von 74 A an 3x 400 V und 50 Hz. Dieser Kompressor mit Motor ist ein handelsüblicher Verdichter für Wärmepumpen und wird häufig in Einfamilienhäuser und kleineren Mehrfamilienhäuser eingesetzt.

In der Figur 3 ist ein drei-phasig gemessener Anlaufstrom desselben Motors aus Figur 2 dargestellt, wobei diesmal ein Anlasser mit Heissleiter nach dem Stand der Technik verwendet wurde. Deutlich zu erkennen ist der regelmässige Verlauf und das gleichmässige Ansteigen des Stromes in den drei Zuleitungen oder Phasen zu erkennen. Durch die Verwendung von Heissleitern in den Zuleitungen werden keine störungsrelevanten Oberwellen mehr generiert, da ein Heissleiter eine rein ohmsche Komponente ist. Die Startcharakteristik erfüllt die Normen EN 61000-3-3 und EN 61000-3-2. Der Start des Motors erfolgt ruhig und kontrolliert. Die maximalen Anlaufströme betragen ca. 31 A und der maximale Mittelwert des Anlaufstromes I_{RMSmax} beträgt nur noch 22.3 A. Es wurde bereits eine Reduktion der Strombelastung in der Grössenordnung von 50% erreicht.

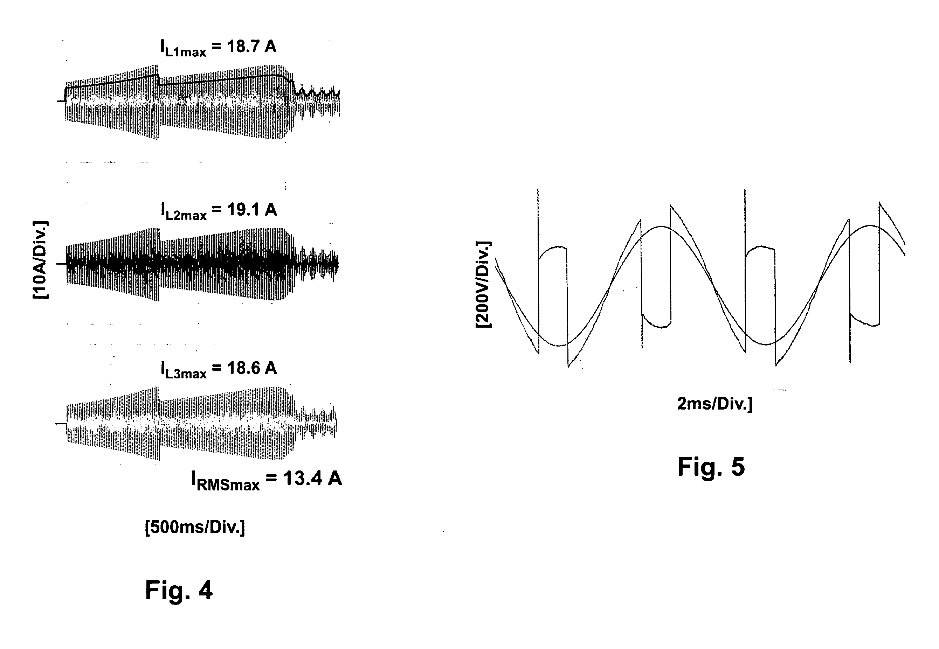

Die Figur 4 zeigt wiederum ein drei-phasig gemessener Anlaufstrom desselben Motors, welcher schon für die Messungen der Figuren 2 und 3 verwendet wurde. Der Motor wird jedoch mit der erfindungsgemässen Vorrichtung aus der Figur 1 gestartet. Der Startvorgang wird deutlich verlängert und beträgt ca. 2.5 s gegenüber 0.4 s oder 0.3 s der Figuren 2 und 3. Im Gegenzug sind jedoch die maximalen Anlaufströme deutlich reduziert, so dass diese mit jeder Haushaltssicherung von 10 A geliefert werden können. Die maximalen Anlaufströme werden von der erfindungsgemässen Vorrichtung überwacht. Bei erreiche von 20 A in einer Zuleitung werden die Umschaltelemente 14 (siehe Figur 1) betätigt, so dass das nachfolgende Heissleiterelement den Stromanstieg kontrolliert. Dieses Umschalten kann deutlich nach ca. 1 s erkannt werden. Beim vorliegenden Beispiel kommt in jeder Zuleitung oder Phase ein Stellglied mit zwei Heissleiterelementen zum Einsatz, d.h. es kann in jeder Phase einmal umgeschaltet werden. Der maximale Mittelwert des Anlaufstromes I_{RMSmax} beträgt nur noch 13.4 A.

In Figur 5 ist stark vergrössert ein Vergleich der Rückwirkung eines Anlassers mit Phasenanschnitt gegenüber der Vorrichtung gemäss Figur 1 dargestellt, wobei ein Zeitbereich 200 ms nach dem Einschalten gezeigt wird. Deutlich zu erkennen sind zwei Spannungskurven, wobei die rein sinusförmige Kurve von der erfindungsgemässen Vorrichtung gemäss Figur 1 stammt. Die zweite Kurve stammt von einer Phasenanschnittsteuerung. Entsprechend wird in jeder Halbwelle der Sinuskurve ein Bereich ausgeschnitten. Dieses Ausschneiden oder Abschneiden bewirkt jedoch extreme Steigungen in den Spannungskurven im Moment. Die Steigung der Flanke beträgt dabei im Falle des Phasenanschnittes dU/dt = 100 V/µs, während bei der Sinuskurve gemäss erfindungsgemässer Vorrichtung die maximale Flankensteilheit leidglich dU/dt = 0.072 V/µs beträgt, also um einen Faktor 1389 geringer ist. Dass die steilen Flanken der Spannungskurve der Phasenanschnittsteuerung unwiderruflich zu Störungen im Versorgungsnetz und zu hohen dynamischen Stossmomenten führen ist offensichtlich.

## Patentansprüche

1. Vorrichtung (1) zum Anlassen eines Motors (4) für Wechselstrom, insbesondere für einen Kompressor (5), wobei der Motor (4) wenigstens eine Zuleitung (3) für die elektrische Stromversorgung aufweist, umfassend
- ein Stellglied (10) zum Begrenzen des Stromes in der Zuleitung (3),
- ein Schaltelement (16) zum Überbrücken des Stellgliedes (10),
- ein Stromüberwachungselement (15) zum Überwachen des Stromes in der Zuleitung (3),
- eine Steuerung (18) zum Ansteuern des Schaltelementes (16),
**dadurch gekennzeichnet, dass** das Stellglied (10) wenigstens ein erstes Heissleiterelement (11) und ein zweites Heissleiterelement (12) sowie ein Umschaltelement (14) zum Umschalten zwischen dem wenigstens ersten und zweiten Heissleiterelement (11, 12) umfasst.

2. Vorrichtung (1) nach Anspruch 1, **dadurch gekennzeichnet, dass** das Umschaltelement (14) von der Steuerung (18) ansteuerbar ist, insbesondere in Abhängigkeit des überwachten Stromes in der Zuleitung (3).

3. Vorrichtung (1) nach Anspruch 1 oder 2, **dadurch gekennzeichnet, dass** die Steuerung (18) derart ausgestaltet ist, dass diese beim Erreichen eines voreingestellten oder voreinstellbaren ersten Stromwertes in der Zuleitung (3) das Umschaltelement (14) betätigt.

4. Vorrichtung (1) nach einem der Ansprüche 1 bis 3, **dadurch gekennzeichnet, dass** die Vorrichtung ein Spannungsüberwachungselement (17) zum Überwachen der Spannung über dem Stellglied (10) aufweist.

5. Vorrichtung (1) nach einem der Ansprüche 1 bis 4, **dadurch gekennzeichnet, dass** das Schaltelement (16) von der Steuerung (18) in Abhängigkeit der Spannung über dem Stellglied (10) ansteuerbar ist.

6. Vorrichtung (1) nach einem der Ansprüche 1 bis 5, **dadurch gekennzeichnet, dass** die Steuerung (18) derart ausgestaltet ist, dass diese bei Erreichen eines voreingestellten oder voreinstellbaren Spannungswertes über dem Stellglied (10) das Schaltelement (16) betätigt.

7. Vorrichtung (1) nach einem der Ansprüche 1 bis 6, **dadurch gekennzeichnet, dass** die Vorrichtung (1) einen Nulldurchgangsdetektor (19) aufweist und die Steuerung (18) derart ausgestaltet ist, dass diese das Schaltelement (16) und/oder das Umschaltelement (14) im Nulldurchgang ansteuert.

8. Vorrichtung (1) nach einem der Ansprüche 1 bis 7, **dadurch gekennzeichnet, dass** die Vorrichtung (1) einen Sicherungsschalter, insbesondere in Form eines Nulldurchgangsschalters (20), zum Einschalten der Vorrichtung (1) aufweist und dass die Steuerung (18) derart ausgestaltet ist, dass diese bei Überschreiten eines vorgegebenen oder vorgebbaren zweiten Stromwertes in der Zuleitung (3) den Sicherungsschalter automatisch ausschaltet.

9. Vorrichtung (1) nach Anspruch 8, **dadurch gekennzeichnet, dass** die Steuerung (18) einen Timer mit einer voreingestellten oder voreinstellbaren Wartezeit umfasst und die Steuerung (18) derart ausgestaltet ist, dass nach erfolgtem automatischem Ausschalteten des Sicherungsschalters und nach Ablauf der Wartezeit die Steuerung (18) den Sicherungsschalter wieder einschaltet.

10. Verfahren zum Anlassen eines Motors (4) für Wechselstrom, insbesondere eines Motors (4) für einen Kompressor (5), wobei in einer Zuleitung (3) zum Motor (4) ein mit einem Schaltelement (16) überbrückbares Stellglied (10) angeordnet ist, wobei das Stellglied (10) ein Umschaltelement (14) und wenigstens ein erstes Heissleiterelement (11) und ein zweites Heissleiterelement (12) aufweist, umfassend die Schritte:
- Zuschalten des Stellgliedes (10) mit dem ersten Heissleiterelement (11) in die Zuleitung (),
- Umschalten vom ersten Heissleiterelement (11) zum zweiten Heissleiterelement (12).

11. Verfahren nach Anspruch 10, **dadurch gekennzeichnet, dass** der Strom in der Zuleitung (3) überwacht wird und das Umschalten zwischen den Heissleiterelementen (11, 12) in Abhängigkeit vom Strom in der Zuleitung (3) erfolgt.

12. Verfahren nach Anspruch 10 oder 11, **dadurch gekennzeichnet, dass** das Umschalten bei Erreichen eines ersten voreingestellten oder voreinstellbaren Stromes in der Zuleitung (3) erfolgt.

13. Verfahren nach einem der Ansprüche 10 bis 12, **dadurch gekennzeichnet, dass** die Spannung über dem Stellglied (10) überwacht wird und bei Erreichen einer voreingestellten oder voreinstellbaren Spannung das Stellglied (10) überbrückt wird.

14. Verfahren nach einem der Ansprüche 10 bis 13, **dadurch gekennzeichnet, dass** der Nulldurchgang der Spannung in der Zuleitung detektiert wird und das Umschalten und/oder Überbrücken im Nulldurchgang erfolgt.

15. Verfahren nach einem der Ansprüche 10 bis 14, wobei der Motor (4) zum Antreiben einer Last, insbesondere eines Kompressors (5) vorgesehen ist, **dadurch gekennzeichnet, dass** vor dem Anlassen die Last vom Motor (4) entkoppelt oder reduziert wird.

16. Verfahren nach einem der Ansprüche 10 bis 15, wobei in einer Zuleitung (3) zum Motor (5) ein Sicherungsschalter, insbesondere in Form eines Nulldurchgangsschalters (20), angeordnet ist, **dadurch gekennzeichnet, dass** bei Überschreiten eines vorgegebenen oder vorgebbaren zweiten Stromwertes in der Zuleitung (3) der Sicherungsschalter automatisch ausgeschaltet wird.

17. Verfahren nach Anspruch 16, **dadurch gekennzeichnet, dass** nach erfolgtem automatischem Ausschalten des Sicherungsschalters und nach Ablauf einer voreingestellten oder voreinstellbaren Wartezeit der Sicherungsschalter wieder eingeschaltet wird.
